Europäisches Patentamt

European Patent Office

Office européen des brevets

(11) Publication number: **0 156 237**
**A2**

(12) # EUROPEAN PATENT APPLICATION

(21) Application number: 85102806.8

(51) Int. Cl.⁴: **C 08 J 7/04**

(22) Date of filing: 12.03.85

(30) Priority: 29.03.84 US 594454

(43) Date of publication of application:
02.10.85 Bulletin 85/40

(84) Designated Contracting States:
AT BE CH DE FR GB IT LI LU NL SE

(71) Applicant: Teepak, Inc.
Executive Plaze East Suite 1100 1211 West 22nd Street
Oakbrook Illinois 60521(US)

(72) Inventor: Coleman, Harold Robert
R.R. 2 Box 293C
Covington Indiana 47932(US)

(72) Inventor: Rahman, Matiur
1906 Lynwood Drive
Champaign Illinois 61820(US)

(74) Representative: Weber, Dieter, Dr. et al,
Dr. Dieter Weber und Klaus Seiffert Patentanwälte
Gustav-Freytag-Strasse 25 Postfach 6145
D-6200 Wiesbaden 1(DE)

(54) Process for color coating cellulosic casings.

(57) A process for the preparation colored resin-coated regenerated cellulose film which comprises coating a gel cellulose film with a coating composition comprising an aqueous solution of an anionic dye and a cationic thermosetting polymer and drying and curing the resultant coated gel film.

EP 0 156 237 A2

casings can be improved, particularly with respect to receptivity to oil-base or flexigraphic inks by applying to the casing while still in the gel state, prior to drying, an aqueous solution of epoxy-substituted resin consisting of a water-soluble thermosetting reaction product of an epihalohydrin and a polysecondary amine. The application of such coatings to regenerated cellulose casings is described in U. S. Patent Application 3,764,350.

U.S. Patent 4,289,171 discloses the preparation of sausage casings and the like by coating a fibrous web with a cationic resin binder, such as the reaction product of epichlorohydrin with a polyaminopolyamide in admixture with a coloring chemical substance and subsequently applying a viscose solution to the pre-treated fibrous web and reqenerating the viscose.

It is further known from U.S. Patent 4,238,234 that stable, aqueous printing inks for painting on non-woven fabrics, such as tissue paper may be prepared from the combination of an anionic dye and a cationic fixing agent prepared by reacting a polyepihalohydrin with an excess of an aliphatic polyamine which contains at least one primary or at least two secondary amino groups, which may bear one or more hydroxyl groups and which has a molecular weight not greater than 200.

## SUMMARY OF THE INVENTION

The present invention provides a process for the coloring of cellulosic film, such as a cellulosic food casing, which comprises coating at least a portion of at least one surface of a

# PROCESS FOR COLOR COATING CELLULOSIC CASINGS

## BACKGROUND OF THE INVENTION

This invention relates to a cellulosic casing suitable for use as a food casing and to a method for color-coating cellulosic casings.

Regenerated cellulose casings prepared from a cellulosic solution such as viscose are commonly used for encasing food products such as sausages, bologna, cheese and the like. In the manufacture of such casings a viscose may be extruded as a tube through an annular die into a coagulating and regenerating bath. In another method, viscose may be coated onto a tubular roll of paper and the cellulose regenerated. The tube is then treated in an acid bath, then washed to remove by-products, impregnated with a softening agent such as glycerine and dried.

In the preparation of many food products, it is desirable to color the food product and/or the food casing employed in order to increase consumer appeal of the encased food product. Dyes that are normally used to color or dye regenerated cellulose are those used in the dyeing of cotton and rayon. Thus, the selection of dyes available for this purpose is limited. Moreover, the dyed regenerated cellulose casing commonly exhibits some degree of dye rub-off or crocking, particularly upon rewetting prior to stuffing.

It is known that the surface of regenerated cellulose gel cellulose film with a coating composition comprising an aqueous solution of a water-soluble anionic dye and a water-soluble thermosetting cationic polymer and drying the resultant coated gel film to provide a dried regenerated cellulose film having on at least a portion of at least one surface thereof a colored thermoset polymeric coating.

The coating compositions which may be employed in the preparation of colored coatings on cellulose films in accordance with this invention are essentially homogeneous aqueous solutions or suspensions of a cationic thermosetting resin and an anionic dye. The amounts and proportions of resin and dye in the coating solution may vary considerably. For example, the resin and dye may be present in a weight ratio of about 200:1 or higher to about 2:1 or less and in amounts sufficient to provide an aqueous solution containing about 3 or less to about 30 or greater weight percent total resin and dye.

In addition to the resin and dye, the coating composition may contain various other adjuvants and processing aids known in the art, including, for example, viscosity control agents, such as polyvinyl alcohol or methyl cellulose, surfactants such as sulfated polyoxyethylene alkylphenols, and the like. There may also be included small amounts of the casing plasticizing agent, such as glycerol, to preclude leaching of the plasticizer from the casing during application of the coating.

The cationic thermosetting resins suitable for use in the coating process of this invention are water-soluble epoxy-substituted polysecondary amine resins prepared by the reaction of an epihalohydrin, e.g., epichlorohydrin, with polymers containing a plurality of NH groups and having an epoxide equivalent weight of at least about 100 and preferably less than about 2000 (as determined by reaction with mercaptoethanol in the procedure described in Bates TAPPI, 52, No. 6, 169, page 1163). Examples of such resinous materials include water-soluble, thermosetting, reaction product of epihalohydrin and a polyamine, selected from the group consisting of polyamide amines, such as condensation reaction products of a polyalkylene polyamine, e.g., diethylene triamine and triethylene tetraamine, with an aliphatic dicarboxylic acid, e.g., succinic acid and adipic acid, and polyurea amines, such as condensation reaction products of the described polyalkylene polyamines and aliphatic diisocyanates, e.g., 4,4'-methylene bis (cyclohexyl isocyanate). Typically, the resins employed will have a water solubility of at least 5% at 25° Celsius and will be capable of forming aqueous solutions having relatively low viscosities at concentrations suitable for the process of this invention. Generally, the viscosity of a 1% aqueous solution of a suitable resin will be less than about 100 centipoises at 25° Celsius.

A particularly preferred cationic thermosetting resin for use in the present invention because of its stability, low viscosity and durability at neutral pHs to form non-film coatings is Kymene 557 (also called Hercules Resin 2000), a water-soluble, thermosetting epoxy-substituted polymer marketed by Hercules, Inc., Kymene 557 is the reaction product of epichlorohydrin and an adipic acid-diethylene triamine polyamide having an epoxide equivalent content of about 450-500 (as determined by reaction with mercaptoethanol in the procedure described in Bates, TAPPI, 52, No. 6, 1969, Page 1163), a Kjeldahl nitrogen content of about 13% and a viscosity at a 10% concentration in water of about 30 centipoises at 25° Celsius.

The anionic dyestuffs suitable for use in the process of this invention include for example, those dyes containing acid groups such as sulfonic and/or carboxylic acid groups and are described in the literature under various headings or classifications, such as "Acid Dyes", "Direct Dyes" and "Reactive Dyes". Typical anionic dyes that may be employed include Acid Blue 1, Red 40, Yellow 5, Yellow 6 and the like. In the final dried coating of this invention the anionic dyes provide a clear, water-fast color. Mixtures of dyes may be employed to vary the shade and/or color of the final coating. Thus, for example, an orange color similar to that known as Suntan is achieved by employing a dye mixture of approximately equal parts of Red 40 and Yellow 6. A green color is achieved with mixtures of Blue 1 and Yellow 5. Furthermore, the final color or shade may be varied by the combined effect of one or more dyes or colorants in the foodstuff or in the cellulose casing and one or more dyes or colorants in the cationic thermosetting resin coating.

The aqueous coating compositions of this invention may be applied to the gel film in a known manner using conventional methods such as rolling, brushing, dipping, spraying and the like. The coated film may then be dried and the resin cured by heating in air. In practice, the coatings are typically oven-dried at temperatures of about 70 - 200° Celsius to a cured coating having a moisture content of about 3 to about 10 percent.

In a particular embodiment of the invention, the dye employed is a pH sensitive indicator dye. The use of a pH sensitive indicator dye, such as Methyl Red results in a coating composition which will vary in color according to the pH of its environment. Thus, for example, the condition, as represented by pH of a stuffed meat product can be monitored by observing the color of the coating. In this manner, ageing of the encased food product due, for example, to the action of acid producing bacteria, is readily observable. Among the pH sensitive indicator dyes that may be employed are Methyl Red, Alizarin Yellow and the like.

The following specific examples are provided to further illustrate the invention and the manner in which it may be carried out. It will be understood, however, that the specific details given in the examples have been chosen for purposes of illustration and are not to be construed as a limitation on the invention. In the examples, unless otherwise indicated, all parts and percentages are by weight and all temperatures are in degrees Celsius.

EXAMPLE 1

A regenerated cellulose film sheet was prepared by passing viscose through an extrusion slit into a coagulating and regenerating bath. The film was washed and then plasticized with glycerine following the coagulating and regenerating baths. The aqueous die-containing coating solution was prepared by combining 10 parts of an aqueous solution of Kymene 557 (12.5% solids); 5 parts of aqueous solution of Red 40 dye (0.25% solids); and 10 parts of water. The coating solution was applied to the outer surface of the gel cellulose film casing by dipping the casing therein. The coated casing was then heated in air to dry the coating (to less than about 10% moisture content) and cure the resin. The resultant coated casing was a clear red color that exhibited no color loss upon soaking in water.

EXAMPLE 2

The procedure of Example 1 was repeated except that in place of 5 parts of red 40 dye solution there was employed 5 parts of an aqueous solution of the dye Yellow 5 (0.25% solids). The resultant coated casing was a clear yellow color and exhibited no loss of color upon soaking in water.

EXAMPLE 3

The procedure of Example 1 was repeated except that in place of the 5 parts of Red 40 dye solution there was employed 5 parts of an aqueous solution of the dye Blue 1 (0.25% solids). The resultant color coated casing was a clear blue and exhibited no color loss upon soaking in water.

EXAMPLE 4

The procedure of Example 1 was repeated except that in place

of the Red 40 dye solution there was employed 5 parts of an aqueous solution of the dye Yellow 6 (0.25% solids). The dyed coated casing was a clear yellow that exhibited no loss of color upon soaking in water.

EXAMPLE 5

The procedure of Example 1 was repeated except that in place of the 5 parts of dye solution there was employed 5 parts of an aqueous solution of equal parts of Red 40 and Yellow 6 at a 0.25% solids concentration. The dried coated casing exhibited a clear orange color that exhibited no color loss upon soaking the casing in water.

EXAMPLE 6

The procedure of Example 1 was repeated except that in place of the 5 parts of aqueous dye solution there was employed 5 parts of an aqueous solution of a dye premixture of 2 parts of Blue 1 with 48 parts of Yellow 5 at a total dye solids concentration of 0.25%. The resultant coated casing was a clear green color and exhibited no color loss upon soaking in water.

EXAMPLE 7

A coating solution was prepared by combining 15 parts of 0.1% methyl red indicator solution, 10 parts of an aqueous solution of Kymene 557 (12.5% solids). The coating solution was applied to a gel cellulose film casing and the coated casing was heated in air to 105°C to dry the casing and cure the resin. The resultant color coated casing was a clear yellow and exhibited no loss of color upon soaking in deionized water. However, with the addition of a small amount of acetic acid to the deionized water
the coated casing responded to the environment by changing from
yellow to red in color.

## EXAMPLES 8 - 14

Following the general procedure of Examples 1-7, a series of
coating solutions were prepared, coated onto the outer surface
of a gel cellulose film casing, then dried and cured at about 100
- 110°C. The resultant clear color coated casing was
subsequently soaked in water and found to be color-fast. The
coating formulations employed are set forth in Table 1 below:

### TABLE I

| Example | 8 | 9 | 10 | 11 | 12 | 13 | 14 |
|---|---|---|---|---|---|---|---|
| Composition | (Parts by weight) | | | | | | |
| Kymene 557 (12.5% solids) | 32 | 32 | 32 | 8 | 6 | 5 | 2 |
| Polyvinyl alcohol (10% aq. soln.) | | | | 2.5 | 5 | 6.3 | 10 |
| Hydroxypropyl cellulose(5% aq.soln) | 10 | | | | | | |
| Triton X-100 (Surfactant) | 5 | 5 | 5 | | | | |
| Hydroxyethyl cellulose | | 10 | | | | | |
| Methyl cellulose | | | 10 | | | | |
| Red 40 Dye | 3 | 3 | 3 | 2 | 2 | 1 | 1 |
| Yellow 5 dye | 3 | | | | 3 | | 4 |
| Yellow 6 dye | 1 | 1 | 1 | 3 | | 4 | |
| H₂0 | | | | 9.5 | 9 | 8.7 | 3 |

## Claims

1. A process for manufacturing colored resin-coated regenerated cellulose film which comprises: coating at least
a portion of at least one surface of a gel cellulose film with
a coating composition comprising an aqueous solution of
a water-soluble anionic dye and a water-soluble thermosetting cationic polymer and drying the resultant coated
gel film to provide a dried regenerated cellulose film
having, on at least a portion of at least one surface
thereof, a colored thermoset polymeric coating.

2. A process according to Claim 1 wherein said cationic polymer is a water-soluble reaction product of an epihalohydrin and a polysecondary amine selected from the group
consisting of polyamide-amines and polyurea-amines, said
cationic polymer having an epoxy equivalent weight of
at least about 100.

3. A process according to Claim 1 or 2 wherein said cationic
polymer is a water-soluble reaction product of epichlorohydrin and a polyamide formed by condensing a polyalkylene polyamine and a dicarboxylic acid, preferably by condensing diethylenetriamine and adipic acid.

4. A process according to one of the Claims 1 to 3 wherein
said water-soluble anionic dye is selected from those
anionic dyes containing sulfonic and/or carboxylic acid
groups on the dye molecule.

5. A process according to one of the Claims 1 to 4 wherein
said anionic dye is a pH sensitive indicator dye, preferably methyl red, Red 40, Blue 1, Yellow 5 or Yellow 6.

6. A film, especially a food casing, made from regenerated
cellulose having on at least a portion of at least one
surface thereof, a water-insoluble heat-cured thermoset
polymer coating formed from an aqueous solution of a wa-

0156237

-12-

ter-soluble anionic dye and a water-soluble cationic
polymer.

7. A film according to Claim 6 wherein said water-soluble
cationic polymer is a reaction product of an epihalohydrin and a polysecondary amine selected from the group
consisting of polyamide-amines and polyamide-ureas and
having an epoxide equivalent weight of at least about
100.

8. A film according to Claim 6 or 7 wherein said water-soluble cationic polymer is a water-soluble reaction product of epichlorohydrin  and a polyamide formed by condensing a polyalkylene polyamine and a dicarboxylic acid,
preferably by condensing diethylenetriamine and adipic
acid.

9. A film according to one of the Claims 6 to 8 wherein
said anionic dye is selected from those anionic dyes
containing sulfonic and/or carboxylic acid groups.

10. A film according to one of the Claims 6 to 9 wherein
said anionic dye is a pH sensitive indicator dye, preferably methyl red, Red 40, Blue 1, Yellow 5 or Yellow
6.

11. A regenerated cellulose food casing according to one
of the Claims 6 to 10, coated on the outside with the
water-insoluble heat-cured thermoset polymer coating
formed from an aqueous solution of a water-soluble anionic dye and a water-soluble cationic polymer.